# EUROPEAN PATENT APPLICATION

(11) **EP 2 070 581 A1**
(43) Date of publication of application: **17.06.2009**
(21) Application number: 07023888.6
(22) Date of filing: 10.12.2007
(51) Int. Cl.: B01D 53/94, B01J 29/06, B01J 29/70, B01J 29/74, B01J 37/02, B01J 23/42, B01J 23/44

(54) **Oxidation catalyst containing Pt and Pd**

(71) Applicant: HTE Aktiengesellschaft The High Throughput Experimentation Company, 69123 Heidelberg (DE)
(72) Inventor: Gerlach, Olga Dr., 67071 Ludwigshafen (DE)
(74) Representative: Tostmann, Holger Carl

(57) **Abstract**

Catalyst containing a carrier and a coating, **characterized in that** the coating comprises a support material and at least one zeolite, the support material having platinum, palladium and at least one promoter selected from the group consisting of Mg, Ca, La, Ti, Zr, Hf, Au, Si, Sn, P, or mixtures of these promoters, deposited thereon.

## Description

The present invention relates to a catalyst containing a carrier and a coating, characterized in that the coating comprises a support material and at least one zeolite, the support material comprising platinum, palladium and at least one promoter selected from the group consisting of Mg, Ca, La, Ti, Zr, Hf, Au, Si, Sn, P compounds or mixtures of these promoters, loaded thereon. The invention also relates to a process for the manufacture of the catalyst and the use thereof for the purification of exhaust gases from Diesel and lean Otto engines. The catalyst effectively oxidizes carbon monoxide and hydrocarbons, has a high resistance towards hydrothermal aging and is stable during operation.

The important harmful substances from exhaust gas of Diesel engines are carbon monoxide (CO), unburned hydrocarbons (HC) such as paraffins, olefins, aldehydes, aromatic compounds as well as nitric oxides (NOₓ), sulfur dioxide (SO₂) and particulates, which contain soot (carbon-particulate matter) both in solid form and in form of the so-called "volatile organic fraction" (VOF). Further, Diesel exhaust gas contains also oxygen in a concentration, which is, dependent on the operation point, from 1.5 to 15 % (volume/volume).

The harmful substances, which are emitted from lean Otto engines, for example from Otto engines that inject directly, substantially consist of CO, HC, NOₓ, and SO₂. Compared to CO and HC, the oxygen is present in a stoichiometrical surplus.

In the following, Diesel engines and lean Otto engines are termed as "lean combustion engines".

It is already known to employ oxidation catalysts for the removal of harmful substances from said exhaust gases. Said catalysts oxidize carbon monoxide as well as hydrocarbons to water and carbon dioxide. Additionally, soot can be removed by oxidation, wherein also water and carbon dioxide are formed.

US 5,911,961 discloses a method of purifying exhaust gas from diesel engine by using a catalyst which contains platinum and/or palladium. The palladium-containing catalysts have lower conversion activity against the platinum-containing catalysts with respect to the conversion of carbon monoxide and hydrocarbons (see Table 2, column 13 and 14, lines 22 to 46). None of the examples discloses a catalyst having both platinum and palladium.

EP 1 129 764 A1 discloses an oxidation catalyst, which contains at least one zeolite and additionally one of the carrier oxides aluminum oxide, silicon oxide, titanium oxide and aluminum silicate, and at least one of the noble metals Pt, Pd, Rh, Ir, Au and Ag. The examples disclose catalysts having as noble metal platinum only.

US 6,274,107 B1 discloses an oxidation catalyst, which contains cerium oxide, optionally aluminum oxide and a zeolite, for example zeolite beta. The zeolite can be doped with the metals of the platinum group and other metals or metal species, such as Pt, Rh, Pd, Ru, Os, Ir, Cu, Fe, Ni, Cr, and V. The described catalyst promotes the oxidation of CO, HC. None of the examples discloses a catalyst having both platinum and palladium.

EP 0 432 534 B2 claims a continuously working oxidation catalyst having high conversion performance for hydrocarbons and carbon monoxide in low temperature ranges. The catalyst consists of vanadium compounds and metals of the platinum group, which are applied on aluminum oxide, titanium oxide, silicon oxide, zeolite as well as mixtures thereof. According to Tables 2 and 3 of said document, the values for the 50 % conversion of CO and HC (T₅₀ values which are also termed as light-off temperature) for the freshly prepared catalysts are above 200 °C.

EP 0 566 878 A1 discloses an oxidation catalyst having high conversion performance for hydrocarbons and carbon monoxide and inhibited oxidation properties towards nitric oxide and sulphur oxide. The catalyst contains a monolithic body as carrier, which consists of an activity-promoting dispersion coating made from metal oxides such as aluminum oxide, titanium oxide, silicon oxide, zeolite, or a mixture thereof, and metals of the platinum group, which are doped with vanadium or an oxidic vanadium compound. According to Table 1 of said document, the light-off temperature (T₅₀) in the light-off tests at Diesel engines is between 195 °C and 220 °C for the CO oxidation of the freshly prepared catalysts, and between 210 °C and 222 °C for the HC oxidation.

WO 03/024589 A1 relates to a catalyst for the purification of Diesel exhaust gases having at least one noble metal deposited on a non porous silicon dioxide, which for example can be gained by means of flame hydrolysis from silicon tetrachloride. The catalyst exhibits a very good sulfur tolerance.

EP 1 256 691 B1 relates to a multi-zoned catalytical trap for conversion of NOₓ in an exhaust gas stream which emanates from an engine which is operated with periodic alterations between lean and stoichiometric rich conditions. The multi-zoned catalytic trap of the invention is employed in combination with a treatment catalyst disposed upstream of the multi-zoned catalytic trap relative to the exhaust gas stream. Said treatment catalyst should be any of those known to be effective to promote under oxidation conditions the oxidation of hydrocarbons to CO₂ and H₂O (paragraph [0029], lines 34 to 36). A similar disclosure of paragraph [0040], lines 46 to 49, supports the conclusion that the catalytical trap of EP '691 B1 has to be combined with a classical oxidation catalyst in order to perform effectively.

US 7,078,004 B2 discloses a method for treating diesel exhaust gas stream whereby the stream is contacted with an upstream catalyst comprising a cerium component and/or a zeolite component and a particulate filter located downstream from the upstream catalyst. The framework alumina of the zeolite component can be substituted by at least one metal selected from the group B, Ga, In, Fe, Cr, V, As. The exchangeable cationic component of the zeolite can be selected from the group consisting of hydrogen and at least one metal selected from the group consisting of Li, Na, K, Rb, Cs, Mg, Ca, Sr, Ba, Cr, Mn, Fe, Co, Ni, Cu, Nb, Ma, Ta, W, Re, Pt, Pd and Rh.

WO 2006/101777 relates to an oxidation catalyst for the removal of carbon monoxide, hydrocarbons, and particulate matter from exhaust stream. The catalyst comprises a platinum group metal supported on a refractory oxide, tin oxide, and a zeolite.

WO 2007/107371 relates to an oxidation catalyst which comprises palladium, platinum, tin oxide, a carrier oxide and a zeolite. In a preferred embodiment, the catalyst is doped with oxides of gallium, indium or iron.

As a rule, commercially employed catalysts contain platinum. In the following, the advantages and drawbacks of such catalysts are briefly discussed.

Besides the oxidation of CO and HC, such oxidation catalysts also promote the formation of NO₂ from NO and oxygen. Dependent on the total functionality of the catalysts, this can be an advantage or a drawback.

In connection with soot filters, the formation of NO₂ at the Diesel oxidation catalyst may be desired, because the NO₂ contributes to the degradation of soot, i.e. contributes to the oxidation thereof to carbon dioxide and water. Such a combination of Diesel oxidation catalyst and filter for sooty particles is also termed as CRT-(continuously regenerating trap) and is disclosed, for example, in EP 835 684 and US 6,516,611.

Without the use of soot filters in the exhaust gas line, the formation of NO₂ is undesired because NO₂ emission result in a strong and unpleasant odor.

Due to the chemical and physical properties of platinum, the platinum-containing catalysts have considerable drawbacks after high thermal stress.

The exhaust gas temperatures of effective Diesel engines, which frequently are provided with turbo chargers, predominantly run in a temperature range between 100 and 350 °C, wherein regulations are given for the operation points of motor vehicles according to the NED-cycles (New European Driving Cycle). During the operation under partial load, the exhaust gas temperatures are in the range between 120 and 250 °C. During the operation under full load, the temperatures reach 650 to 700 °C as a maximum. On the one hand, oxidation catalysts are required that have low light-off temperatures (T₅₀ values). On the other hand a high thermal stability is required in order to avoid a drastic deactivation loss during the operation under full load. Furthermore, it has to be noted that unburned hydrocarbons accumulate on the catalyst and can ignite there, so that local temperatures of the catalyst can be far beyond the temperature of 700 °C. Temperature peaks of up to 1000 °C may result as a consequence of this effect. Said temperature peaks can lead to a damage of the oxidation catalyst. Then, in particular in the low temperature range, no significant conversion of harmful substances is achieved by means of oxidation.

Further, different filters for soot were developed for the reduction of particle emission from Diesel exhaust gas, which, for example, are described in WO 02/26379 A1 and in US 6,516,611 B1. During combustion of soot, which accumulates on the particulate filters, carbon monoxide can be released, which can be converted to carbon dioxide by means of catalytically active coatings for soot filters. Appropriate coatings can also be termed as oxidation catalysts. For the conversion of soot into harmless CO₂ and water, the collected soot ca be burned up in intervals, where the necessary temperature for the burn-up of the soot can be produced, for example, by engine-internal methods. The burn-up of the soot, however, is associated with a significant release of heat, which can lead to a deactivation of the platinum-containing oxidation catalysts, which are applied on the filters.

For compensation of thermal damages, therefore, platinum-containing oxidation catalysts having high quantities of platinum are mostly provided for exhaust gases from Diesel passenger cars. Said quantities are typically in the range of from 2.1 to 4.6 g/l (60 - 130 g/ft³). For example, up to 9 g platinum may be used for a 2 liter catalyst. The use of high quantities of platinum is an essential expense factor for the treatment of exhaust gases of Diesel vehicles. The reduction of the platinum portion in the catalyst is of high economical interest.

In conjunction with the introduction of Diesel particulate filters, apart form the requirement of a low light-off temperature and the required high thermal stability, further requirements for oxidation catalysts become apparent, which are subsequently exemplarily discussed.

For example, an oxidation catalyst can be installed upstream of the engine particulate filter. Then, it is possible to increase the concentration of hydrocarbons at the oxidation catalyst and to use the heat which is released when burning the hydrocarbons in order to initiate the combustion of the soot on the Diesel particulate filter, which is installed downstream. Alternatively, or also additionally, the Diesel particulate filter itself can be coated with the oxidation catalyst. Thereby, the additional coating of the Diesel particulate filter has the function to oxidize the carbon monoxide, which is released during the combustion of the soot to carbon dioxide. In case of high thermal stability and simultaneous high activity of such a coating, in some applications, the oxidation catalyst which additionally is installed upstream, could be dispensed with. Both functionalities of oxidation catalysts, which are here discussed in connection with Diesel particulate filters, require high thermal stability of the catalysts, wherein platinum-containing catalysts can have drawbacks as mentioned before.

Another problem for the purification of Diesel exhaust gases relates to the presence of sulfur in the Diesel fuel. Sulfur can be deposited onto the carrier oxide and can contribute to a deactivation of the oxidation catalysts by means of catalyst poisoning. Platinum-containing oxidation catalysts show an advantageously good resistance towards sulfur. In the known catalyst formulations, platinum has proven to be superior over the other metals of the platinum group such as rhodium, palladium or iridium.

With respect to the treatment of exhaust gases of lean Otto engines, such as the directly injecting Otto engines, exhaust gas systems are used, which are composed either of a three-way catalytic converter or an oxidation catalyst and a NOₓ-storing catalyst which is installed downstream. In particular, the three-way catalytic converter or the oxidation catalyst has the function of minimizing the relatively high hydrocarbon emissions which arise in the homogenously lean operational mode in particular in the inhomogeneously loading state. Thereby, thermal stability as well as an activity as high as possible at low temperatures of the appropriate catalyst, which is mostly used close to the engine, are of particular importance.

Compared to the more complex 3-way-catalysts, oxidation catalysts appear to be relatively simple formulations comprising platinum, optionally doped with palladium, a sulphur resistant carrier oxide and zeolites, which are beneficial to hydrocarbon adsorption. However, improvements of oxidation catalysts require much knowledge with regard to the complex interrelationship between activity, hydrothermal aging, sulphur poisoning and fouling. Major drawbacks of Diesel oxidation catalysts (DOC) of the state of the art are the very high price of platinum and platinum's strong tendency to sinter under elevated temperatures as may occur during filter regeneration conditions. Thus, the thermal durability requirements for DOCs increase when they are meant to simultaneously serve as Diesel particulate filter (DPF).

Starting from the catalysts of the prior art, the problem to be solved by the present invention was to develop a catalyst for the removal of harmful substances from exhaust gases of lean combustion engines having a well-balanced relation between technical properties and manufacturing costs.

Specifically, the problem to be solved was to develop a catalyst which effectively oxidizes CO and HC to CO₂ and water and which simultaneously has a high thermal stability as well as a good sulphur resistance, wherein expensive platinum that is commonly employed in the commercial oxidation catalysts is at least partially substituted by cheaper active metals. A further objective is to reduce the overall amount of platinum group metals (PGM) without compromising performance and thus to provide economically attractive catalysts.

Additionally, this catalyst to be developed should be suitable for application in conjunction with Diesel particulate filter (DPF) and as a catalytically active coating of DPF. Further, the catalyst should reveal high activity to fulfill the new legislation requirements as stipulated by the Euro-V, Euro-VI, US tier 2 bin 5 standards. The catalyst should preferably be stable upon DPF regenerations and should have a high resistance towards hydrothermal aging.

This problem is solved by a catalyst comprising a carrier and a coating, characterized in that the coating comprises a support material and at least one zeolite, the support material comprising platinum, palladium and at least one promoter selected from the group consisting of Mg, Ca, La, Ti, Zr, Hf, Au, Si, Sn, P compounds or mixtures of these promoters, loaded thereon. Preferably, the catalyst comprises only platinum and palladium as Pt group metals.

In a preferred embodiment, the catalyst is characterized in that the support material is simultaneously loaded and / or is consecutively loaded with platinum and palladium.

Surprisingly, it was found that a consecutive loading of platinum and palladium onto the support material further significantly increases the activity of the catalyst after thermal aging compared to a catalyst where platinum and palladium were simultaneously loaded onto the support. This effect was not predictable. Said consecutive (sequential) loading of Pt and Pd onto the support material was found to be one of the key factors for the development of catalysts having the desired properties.

Thus, in the more preferred embodiment, the catalyst is further characterized in that the support material is at least partially consecutively loaded with platinum and palladium, i.e. not all the platinum and palladium are simultaneously loaded.

In a preferred embodiment, the catalyst is characterized in that the amount of coating is from 30 - 200 g per liter carrier.

In another embodiment, the catalyst is characterized in that the platinum/palladium ratio (weight/weight) is from 10 to 1, preferably from 5 to 1, more preferred from 3 to 1, still more preferred from 2,5 to 1, and particularly preferred from 2 to 1.

In another preferred embodiment, the catalyst is characterized in that the amount of platinum is from 30 to 100 g/ft³ catalyst.

In another preferred embodiment, the catalyst is characterized in that the amount of palladium is from 3 to 50 g/ft³ catalyst.

In a preferred embodiment, the catalyst is characterized in that the total amount of platinum and palladium is from 33 - 150 g/ft³ catalyst, more preferred from 40 - 120 g/ft³ catalyst, still more preferred from 60 - 90 g/ft³ catalyst.

In one embodiment, the catalyst contains platinum in an amount of less than 60 g/ft³ catalyst.

Catalysts having such a low amount of platinum provide a considerable cost advantage compared to commercial platinum-containing catalysts having approximately 130 g/ft³ catalyst while still exhibiting comparable performance after aging at 800 °C, and exhibiting durability and stability upon sulfation regeneration cycles. Thus, when compared to the catalysts of the prior art, the novel catalysts have both technical and economical advantages.

Without wishing to be bound to a theory, it is believed that the instability problem of catalysts containing Pt-Pd caused by regeneration or in the operation in feed gas up to 450 °C was further solved in accordance with the present invention that at least one promoter selected from the group consisting of Mg, Ca, La, Ti, Zr, Hf, Au, Si, Sn, P compounds or a mixture thereof, is loaded on the support material.

Preferably, the amount of promoter is from 0.1 to 15 g/l catalyst.

The terms "palladium" and "platinum" preferably include both the element and the possible oxides and sub-oxides.

The term "promoter" preferably includes all possible oxides, suboxides, hydroxides and carbonates of a promoter element.

Preferably, a "support material" is an oxide, which is thermally stable and which has a large surface. The term "support material" also includes a mixture of at least two different oxides.

Preferably, support materials are used, which still have a large BET surface after treatment at high temperature. A carrier oxide having a low tendency for the binding of sulfur oxides (SOₓ) is particularly preferred. Preferably, the support material contains silicon and/or aluminum. A silicon-containing or aluminum-containing support material is a support material, which in particular contains silicon oxide, aluminum oxide, silicon/aluminum mixed oxide, aluminum silicate, kaolin, modified kaolin or mixtures thereof.

Preferably, said oxides have a BET surface of more than 10 m²/g. Particularly preferred are oxides having a BET surface of more than 50 m²/g. Preferably, support matrials are used, which still have a large BET surface after treatment at high temperature. A carrier oxide having a low tendency for the binding of sulfur oxides (SOₓ) is more preferred.

Furthermore, aluminum oxides are preferred as support materials, which are doped with silicon oxide, with oxides of the earth alkali elements or with oxides of the rare earth elements.

Preferably, the support material is alumina or silica-alumina.

The above-defined support materials are commercially available. A support material consisting of silica-aluminum oxide is, for instance, sold by the company Sasol under the trademark Siralox® or Puralox®.

Additionally to the support material being loaded with the noble metals and the promoters also contains at least one zeolite.

The admixture of zeolite for the formulation of Diesel oxidation catalysts is already known from EP 0 800 856. Zeolites have the capability to adsorb hydrocarbons at low exhaust gas temperatures and to desorb said hydrocarbons when the light-off temperature of the catalyst is reached or is exceeded. As disclosed in EP 1 129 764 A1, the function of the zeolites may be to "crack" long chain hydrocarbons, which are present in the exhaust gas, i.e. to decompose said hydrocarbons into smaller fragments, which then can be more easily oxidized by the noble metal.

The zeolites, which are used as admixtures, can preferably be applied in form of H-ZSM-5, dealuminated Y-zeolite, hydrothermally treated Y-zeolite, mordenite or zeolite-β. Said zeolites can preferably either be applied in pure form or as mixtures. This preferred use also comprises forms of doped zeolites, which are obtained by means of ion exchange or by other treatment. In particular usable are also hydrothermally stable zeolites having a Si/Al ratio > 15.

The zeolite can be preferably present in the sodium form, ammonium form or H form. Furthermore, it is possible to transfer the sodium, ammonium or H form by means of impregnation with metal salts and oxides or by means of ion exchange into another ionic form. As an example, the transfer of Na-Y-zeolite into SE-zeolite (SE=rare earth element) by means of ion exchange in aqueous rare earth element chloride solution is mentioned.

The zeolites employed in the invention are commercially available products. For example, appropriate zeolites are sold by Company Zeolyst under the trademark Zeolyst^{™}.

It is also possible to load the zeolite with platinum and/or palladium and/or one promoter compound selected from group of compounds consisting of Mg, Ca, La, Ti, Zr, Hf, Au, Si, Sn, P compounds. or mixtures thereof.

Preferably, the amount of zeolite is from 5 to 50 g/l catalyst.

Thus, in a preferred embodiment, the catalyst is further characterized in that the zeolite is selected from the group consisting of zeolite-β, ZSM-5, mordenite, DAY, Y-zeolite, or mixtures thereof.

Accordingly, in particularly preferred embodiments, the catalyst containing a carrier and a coating, is **characterized in that** the coating comprises a support material and at least one zeolite, the support material being loaded with platinum, palladium and at least one promoter selected from the group consisting of compounds of Mg, Ca, La, Ti, Zr, Hf, Au, Si, Sn, P, or mixtures of these promoters, wherein platinum and palladium are preferably at least partially consecutively loaded on the support material, the total amount of platinum and palladium preferably being from 33 - 150 g/ft³ catalyst, preferably from 40 - 120 g/ft³ catalyst, still more preferred from 60 - 90 g/ft³ catalyst, the platinum/palladium ratio (weight/weight) being from 10 to 1, more preferred from 2,5 to 1, still more preferred from 2 to 1, the amount of promoter being from 0.05 to 15 g/l catalyst, the amount of zeolite being from 5 to 50 g/I catalyst, and the amount of coating being from 30 to 200 g/l carrier.

Still more preferred is a catalyst containing a carrier and a coating, characterized in that the coating comprises a support material and at least one zeolite, the support material being loaded with platinum, palladium and at least one promoter selected from the group consisting of compounds of Mg, Ca, La, Ti, Zr, Hf, Au, Si, Sn, P compound or mixtures of these promoters, loaded thereon, wherein platinum and palladium are consecutively loaded on the support material, the total amount of platinum and palladium being from 60 - 90 g/ft³ catalyst, the platinum/palladium ratio (weight/weight) being from 3 to 1, the amount of promoter being from 0.1 to 15 g/l catalyst, the amount of zeolite being from 5 to 50 g/I catalyst, and the amount of coating being from 30 to 200 g/l carrier.

Preferably, the catalyst is provided as a coated honeycomb body.

Preferably, the carrier of the catalyst is a metallic or ceramic monolith or a filter.

For the manufacture of catalyst, all methods can be applied, which generally have proven to be of value within the catalyst research. In particular "washcoat" and/or "honeycomb" technologies have to be mentioned. Exemplarily, the preferred technologies are described below.

The catalyst can basically be produced by a process which comprises steps (i) to (iii):
(i) contacting platinum, palladium and at least one promoter with a support material. Preferably, Platinum, palladium and promoters may also be contacted with the support material in the form of precursors or precursor compounds. Suitable precursors or precursor compounds are explained below. Hereby, different sequences of contacting including thermal treatment between preparation steps can be applied;
(ii) preferably milling the support material having platinum, palladium and at least one promoter or precursor loaded thereon in aqueous suspension to particle sizes of several micrometers, and mixing the same with zeolite suspension resulting in a washcoat suspension which is then deposited onto ceramically or metallically shaped inert bodies. For this, the shaped body is immersed into the washcoat suspension, then, it is dried and preferably calcinated. The process can be repeated until the desired loading of catalytically active coating is achieved;
(iii) optionally, the coated shaped body may be additionally impregnated with a solution or suspension of at least one promoter.

All known methods can be used for the loading of the support material by means of contacting the support material with the dissolved platinum, palladium and promoter compounds as well as for the drying and calcination step of the loaded support material. Said methods comprise processes such "incipient wetness impregnation", "spray impregnation", "spray drying", "spray calcination" and "rotary calcination". The skilled person in the art is familiar with these techniques. In the context of the present invention, "loading with" or "Being loaded on (to)" is synonymous with "bringing in contact".

Apart from the above methods for the homogeneous dispersion of the catalytic active substances onto the support material, the adsorption and precipitation of platinum, palladium and promoters from solutions, can also be applied.

After the loading of all components of the coating onto the carrier, a subsequent drying step and, as a rule, a calcination step is preferably carried out.
Preferably, the calcination step is carried out at a temperature of from 200 to 1000 °C, more preferred of from 300 °C to 900 °C, in particular preferred of from 500 to 800 °C.

The term "platinum, palladium and promoters respectively precursors or precursor compounds thereof" stands for all compounds, which can be suspended in a liquid medium and/or are completely or at least partially soluble in said medium.

Preferably, said liquid medium is water.

As precursors for Mg, Ca, La, Hf, Zr, Sn, preferably salts are applied. As precursors for P, Au, Si and Ti promoters, H₃PO₄, HAuCl₄, colloidal silica and titania preferentially are used as precursors or precursor compounds, respectively.
As platinum and palladium compounds, salts and complex compounds may be preferably employed. For example, salts and complex compounds such as bis(ethanolammonium)-hexahydroxoplatinum (IV) (EA-Pt), tetrammine platinum(II) acetate, tetrammine platinum(II) hydrogencarbonate, tetrammine palladium(II) acetate, tetrammine palladium(II) hydrogencarbonate, tetrammine palladium(II) nitrate can be used. Furthermore, the applied platinum and palladium compounds can be subjected to a chemical (after) treatment. For example, said compounds can be treated with acids or NH₄OH solution.

For the step of loading support materials, a process is preferred, wherein the components are applied being as chloride-free as possible, because a later release of chloride-containing compounds out from the catalyst can lead to damages of the exhaust gas facilities due to corrosion.

Specifically, the process for the manufacture of the catalyst is **characterized in that** it comprises step (i):
(i) loading Pt, Pd and at least one promoter on the support material, wherein platinum and palladium are at least partially consecutively loaded.

Preferred embodiments of the manufacturing process are further characterized in that Pt is loaded on the support material, and in a subsequent step Pd and at least one promoter are loaded, or Pd is loaded on the support material, and in a subsequent step Pt and at least one promoter are loaded, or Pt and at least one promoter are loaded on the support material, and in a subsequent step Pd is loaded, or Pd and at least one promoter are loaded on the support material, and in a subsequent step Pt is loaded.

Said consecutive loading of Pt and Pd in sequential or subsequent steps, e.g. by impregnation according to the methods as explained above, was found to be a key factor for increasing activity after aging. Thus, the preparation of the new catalysts proceeds via a master powder containing the first PGM followed by impregnation of the second PGM or its insertion in the milled suspension of master powder. Preferably, finally the zeolite is added.

In another embodiment, the process for the manufacture of the catalyst is **characterized in that** it includes at least one thermal treatment step. Preferably, said thermal treatment step is a calcination step under conditions as defined above.

Another object of the invention relates to the use of the catalyst for the simultaneous removal of carbon monoxide and hydrocarbons of oxygen-rich exhaust gases from lean combustion engines (Diesel engines and lean Otto-engines) by oxidation of the exhaust gas at the catalyst. In a preferred embodiment, the carrier is a filter, wherein particulate matter is removed.

In the following, the manufacture of exemplary catalysts is illustrated and the properties thereof are presented in comparison to a catalyst of the prior art. The fact that this is illustrated by means of examples and by specifying specific values shall in no case be understood as limitation of the specifications which are made in the description and in the claims.

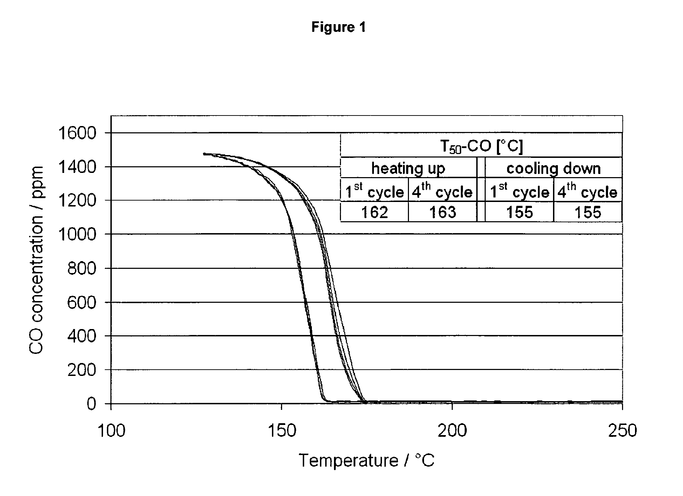

**Figure 1** shows the dependence of the CO concentration at the reactor outlet on temperature in the cyclic operation according to the test protocol B over the catalyst from Example 3 after hydrothermal aging at 800 °C for 16 hs.

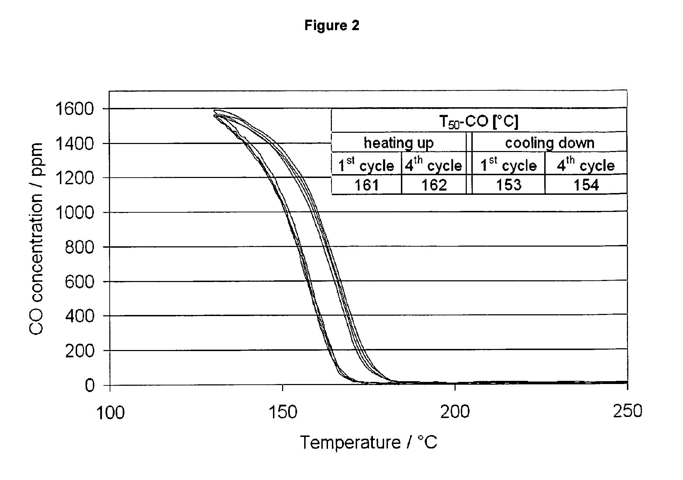

**Figure 2** shows the dependence of CO concentration at the reactor outlet on temperature in the cyclic operation according to the test protocol B over the reference catalyst (comprising more expensive Pt) after hydrothermal aging at 800 °C for 16 hs.

### Examples:

### Example 1

The catalyst according to this example is a coated honeycomb-shaped body made from Cordierit having 400 cpsi (channels per square inch) of NGK Company. To obtain the catalytically active coating, a washcoat suspension was prepared according to the following process:

100 g of silica-alumina (Siralox 5/170, Company Sasol) were calcined at 800 °C in air for 2 hours and were then used as the support material. 6.09 g of the tetraminne-palladium(II)-acetate solution consisting of 18,05 wt % Pd (Company Umicore) were diluted with water. The support material was impregnated with the resulting solution, dried over night at 50 °C and calcined at 300 °C for 15 min. Afterwards, Mg nitrate solution was impregnated to obtain 1.1 % Mg on support material. The resulting solid was dried at 80 °C for 16 hours and calcined at 700 °C in air for 1 hour.

In next step, 47 ml of 0.24 molar solution of EA-Pt were diluted with water and added to the support material consisting of Pd and Mg. The resulting slurry was kept for 1 hour to achieve complete sorption of EA-Pt and was then suspended in water and milled in a ball mill for 10 min.

Separately, zeolite beta CP 7104 (Company Zeolyst) was suspended in water and milled in the ball mill for 2 min. After determination of solid content in both suspensions, the respective amounts were mixed to obtain a washcoat suspension consisting of 80 % loaded support material and 20 % zeolite.

Said washcoat suspension revealed very good adhesion properties. It was applied without addition of a binder for the manufacture of the coated catalyst. (The addition of a binder may not be excluded. Preferentially the addition of a binder is not necessary.) The honeycomb body was coated by immersing into the washcoat suspension, whereby after each coating step the monolith was blown out in order to remove an excess of suspension. It was calcined at 300 °C in air flow.

The washcoat loading was 100 g/l. Said loading represented the solids content of the washcoat in the shaped body after calcination at 300 °C.

Finally, the catalyst was calcined at 700 °C in air for 1 hour.

The loadings of all components of the catalytically active coating in the catalyst according to this example are given in Table 1.

### Example 2

The catalyst according to this example is a coated honeycomb-shaped body made from Cordierit having 400 cpsi (channels per square inch) of NGK Company. To obtain the catalytically active coating, a washcoat suspension was prepared according to the following process:

100 g of silica-alumina (Siralox 5/170, Company Sasol) were used as a support material. 6.09 g of the tetrammine palladium(II)-acetate solution consisting of 18,05 wt % Pd (Company Umicore) were diluted with water. The support material was impregnated with the resulting solution, dried over night at 50 °C and calcined at 300 °C for 15 min. Afterwards, ZrO(NO₃)₂ solution was impregnated to obtain 0.7 % Zr on the support material. The resulting solid was dried at 80 °C for 16 hours and calcined at 800 °C in air for 1 hour. In the next step, 47 ml of 0.24 molar solution of EA-Pt were diluted with water and added to the support material consisting of Pd and Zr. The resulting slurry was kept for 1 hour to achieve complete sorption of EA-Pt and was then suspended in water and milled in a ball mill for 10 min.

Separately, zeolite beta CP 7104 (Zeolyst company) was suspended in water and milled in the ball mill for 2 min. After determination of solids content in both suspensions, the respective amounts were mixed to obtain a washcoat suspension consisting of 80 % loaded support material and of 20 % zeolite.

Said washcoat suspension revealed very good adhesion properties and was applied without addition of further binder for the manufacture of the coated catalyst. The honeycomb body was coated by immersing into the washcoat suspension, whereby after each coating step the monolith was blown out in order to remove an excess of suspension and was calcined at 300 °C in air flow.

The washcoat loading was 100 g/l. Said loading represented the solids content of the washcoat in the shaped body after calcination at 300 °C.

Finally, the catalyst was calcined at 700 °C in air for 1 hour.

The loadings of all components of the catalytically active coating in the catalyst according this example are given in Table 1.

### Example 3

The catalyst according to this example is a coated honeycomb-shaped body made from Cordierit having 400 cpsi (channels per square inch) of NGK Company. To obtain the catalytically active coating, a washcoat suspension was prepared as decribed according to the following process:

10 g of alumina (Puralox SCFa, Company Sasol) were used as a support material. 5.9 ml of an aqueous 1 molar solution of tin oxalate consisting of nitric acid (HNO₃) were mixed with 0.47 ml of an aqueous HNO₃-containing 1 molar **palladium** nitrate solution and were diluted with water. The support material was impregnated with said solution. The so impregnated support material was then dried for 16 hours at 80 °C in a drying oven. Subsequently, the material was calcined for 2 hours at 800 °C in air in a muffle furnace. Afterwards, 25.8 µl of an aqueous 1 molar solution of HAuCl₄ diluted with water were impregnated. The resulting material was dried at 80 °C and calcined at 800 °C in air for 2 hours.

In next step, 1.22 g of the tetrammine platinum(II) acetate solution consisting of 16.3 % Pt (Company Umicore) were mixed with 0.277 g of the tetrammine palladium(II) acetate solution consisting of 18.05 % Pd (Company Umicore), diluted with water and added to the support material consisting of Pd, Sn and Au. The resulting slurry was kept over night to achieve complete sorption of Pt and Pd, and was then suspended in water. Zeolite was added to the suspension, which was then milled in a ball mill for 10 min. The resulting washcoat suspension consisted of 80 % loaded support material and 20 % zeolite.

Said wascoat suspension revealed very good adhesion properties, It was applied without addition of further binder for the manufacture of the coated catalyst. The honeycomb body was coated by immersing into the washcoat suspension, whereby after each coating step the monolith was blown out in order to remove an excess of suspension and was calcined at 300 °C in air flow.
The washcoat loading was 140 g/l. Said loading represented the solids content of the washcoat in the shaped body after calcination at 300 °C.

Finally, the catalyst was calcined at 700 °C in air for 2 hours.

The loadings of all components of the catalytically active coating in the catalyst according to this example are given in Table 1.

One part of the coated catalysts was crushed, sieved and used for the hydrothermal aging according to the procedure described below.

### Hydrothermal aging

The hydrothermal aging of catalysts was carried out in a muffle furnace at a temperature of 700 °C for 5 hours and/or at 800 °C for 16 hours in an air stream, which contained 10 % water.

**Table 1: Components of catalytically active coating and their loading in the catalysts according to Examples 1 to 3**

| | Loading [g/l] | | | | | | | | |
|---|---|---|---|---|---|---|---|---|---|
| | Puralox SCFa 140 | Siralox 5/170 | CP 7104 | Pt | Pd | Mg | Zr | Sn | Au |
| Example 01 | - | 76 | 20 | 1.68 | 0.84 | 0.84 | - | - | |
| Example 02 | - | 77 | 20 | 1.68 | 0.84 | - | 0.52 | - | |
| Example 03 | 112 | - | 28 | 2.0 | 1.0 | - | - | 7 | 0.05 |

### Evaluation Test for exhaust gas purification performance

Evaluation of light-off values for CO and HC conversion was performed according to the test protocol A under steady-state operation on crushed samples after hydrothermal aging at 700 and 800 °C.
The durability of catalysts after hydrothermal aging at 800 °C was investigated on cores of 1 inch length and 1 inch diameter in cyclic operation in the feed gas between 130 and 400 °C applying test protocol B.

### Test protocol A

Activity measurements were carried out in a fully automated test rig having 16 parallel fixed bed reactors made from stainless steel (the inner diameter of an individual reactor was 7 mm). The catalysts were tested under conditions, which were similar to Diesel exhaust gas, in a continuously operational mode with an oxygen surplus under the following conditions:
- Temperature range:: 120 - 450 °C
- Exhaust gas composition:: 1500 ppm CO, 500 ppm HC (on C₁ basis), 100 ppm NO, 13 % O₂, 5 % CO₂; 4 % H₂O, balance - N₂.
- GHSV:: 100.000 h⁻¹

For testing, a sieve fraction having particle sizes of from 315 - 700 µm of crushed catalyst was used.

As a reference catalyst, a commercially available honeycomb shaped oxidation catalyst for purification of exhaust gases from Diesel cars produced in 2005 was applied having 4.59 g/l (130 g/ft³) platinum as determined by XRF analysis.
The determination of CO was carried out with a FT-IR-device of the Company Nicolet. O₂ was determined with a λ-sensor of the Company Etas, whereas the determination of NO, NO₂ and NOₓ was carried out with a chemoluminescence device of the Company Eco-Physics. For HC analysis, FID of the ABB Company was used.

For the evaluation of the catalysts, the T₅₀ values (temperature, where 50 % conversion is achieved) were used as criteria for the CO and HC oxidation activity.

The T₅₀ values for the catalysts after hydrothermal aging at 700 °C for 5 hs and 800 °C for 16 hs are summarized in Table 2.

### Test protocol B

Durability tests were carried using catalyst cores of 2 inch length and of 1 inch diameter in a continuous cyclic operation including heating and cooling the catalyst in the feed gas during 16 hours. The heating rate and cooling down ramp was 2 °C/min.

### The following conditions simulating the Diesel exhaust gas were applied:

- Temperature range:: 130 - 400 °C
- Exhaust gas composition:: 1500 ppm CO, 500 ppm HC (on C₁ basis), 100 ppm NO, 13 % O₂, 5 % H₂O, balance - N_{2.}
- GHSV:: 30.000 h⁻¹

The determination of CO and CO₂ was carried out using the Uras device of ABB Company, whereas for the HC analysis, FID of the ABB Company was used.

For the evaluation of the catalysts, the T₅₀ values (temperature, where 50 % conversion is achieved) was used as criteria for the CO and HC oxidation activity.

**Table 2: Light-Off temperatures (T₅₀ values) for CO and HC oxidation on catalysts after hydrothermal aging at 700 and 800°C**

| Example | T₅₀ (CO) [°C] | | T₅₀ (HC) [°C] | |
|---|---|---|---|---|
| | aged 700 °C | aged 800 °C | aged 700 °C | aged 800 °C |
| 01 | 170 | 173 | 173 | 180 |
| 02 | 164 | 167 | 165 | 175 |
| 03 | n.d. | 165 | n.d. | 169 |
| reference | 161 | 169 | 160 | 173 |

| | | | | |
|---|---|---|---|---|
| n.d. - not determined | | | | |

## Claims

1. Catalyst containing a carrier and a coating, **characterized in that** the coating comprises a support material and at least one zeolite, the support material comprising platinum, palladium and at least one promoter selected from the group consisting of Mg, Ca, La, Ti, Zr, Hf, Au, Si, Sn, P compunds, or mixtures of these promoters, loaded onto said support.

2. Catalyst of claim 1, **characterized in that** the support material is at least partially consecutively loaded with platinum and palladium.

3. Catalyst of claim 1 or 2, **characterized in that** the amount of coating is from 30 - 200 g/l carrier.

4. Catalyst of any one of claims 1 to 3, **characterized in that** the platinum/palladium ratio (weight/weight) is from 10 to 1.

5. Catalyst of any one of the preceding claims, **characterized in that** the amount of platinum is from 30 to 100 g/ft³ catalyst.

6. Catalyst of any one of the preceding claims, **characterized in that** the amount of palladium is from 3 to 50 g/ft³ catalyst.

7. Catalyst of any one of the preceding claims, **characterized in that** the zeolite is selected from the group consisting of zeolite beta, ZSM-5, mordenite, DAY, Y-zeolite, or mixtures thereof.

8. Catalyst of any one of the preceding claims, **characterized in that** the amount of promoter is from 0.1 to 15 g/l catalyst.

9. Catalyst of any one of the preceding claims, **characterized in that** the amount of zeolite is from 5 to 50 g/l catalyst.

10. Catalyst of any one of the preceding claims, **characterized in that** the carrier is a metallic or ceramic monolith or a filter.

11. Catalyst of any one of the preceding claims, **characterized in that** the support material is alumina or silica-alumina.

12. Process for the manufacture of a catalyst of any one of claims 1 to 11, **characterized in that** it comprises step (i):
(i) loading Pt, Pd and at least one promoter on the support material, wherein at least parts of the platinum and/or at least parts of the palladium are consecutively loaded.

13. Process of claim 12, **characterized in that** Pt is loaded on the support material, and in a subsequent step Pd and at least one promoter are loaded.

14. Process of claim 12, **characterized in that** Pd is loaded on the support material, and in a subsequent step Pt and at least one promoter are loaded.

15. Process of claim 12, **characterized in that** Pt and at least one promoter are loaded on the support material, and in a subsequent step Pd is loaded.

16. Process of claim 12, **characterized in that** Pd and at least one promoter are loaded on the support material, and in a subsequent step Pt is loaded.

17. Process of any one of claims 12 to 16, **characterized** that the process includes at least one thermal treatment step.

18. Use of a catalyst of any one of claims 1 to 11, or use of a catalyst manufactured according to a process of any one of claims 12 to 17, for the simultaneous removal of carbon monoxide and hydrocarbons of oxygen-rich exhaust gases from lean combustion engines (Diesel engines and lean Otto-engines) by oxidation of the exhaust gas at the catalyst.

19. Use of claim 18, **characterized in that** the carrier is a filter, wherein particulate matter is removed.
